(19) Europäisches Patentamt European Patent Office Office européen des brevets

(11) **EP 2 168 674 A1**

(12) **EUROPEAN PATENT APPLICATION**

(43) Date of publication:
**31.03.2010 Bulletin 2010/13**

(51) Int Cl.:
***B01J 19/00*** *(2006.01)* ***C09B 67/00*** *(2006.01)*

(21) Application number: **09171342.0**

(22) Date of filing: **25.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.09.2008 JP 2008250605**
**29.09.2008 JP 2008250791**

(71) Applicant: **FUJIFILM CORPORATION**
**Minato-ku**
**Tokyo 106-8620 (JP)**

(72) Inventors:
• **Takahashi, Kazunori**
**Kanagawa 258-8577 (JP)**
• **Miyoshi, Yoshiyuki**
**Kanagawa 258-8577 (JP)**

(74) Representative: **HOFFMANN EITLE**
**Patent- und Rechtsanwälte**
**Arabellastrasse 4**
**81925 München (DE)**

(54) **Method for producing particulates**

(57)   A pigment solution (L1) that an organic pigment is dissolved in a solvent, a poor solvent (L2) which decreases solubility of the organic pigment in the pigment solution (L1) to precipitate particles of the organic pigment, and a dispersant solution (L3) containing a dispersant in an organic solvent which acts as a good solvent to the organic pigment are merged in one merging region (14) via each separate inlet flow channel (16A to 16C) and flowed out from the merging region (14) through one single mixing flow channel (18), thereby producing particulates by directly dispersing particles precipitated in an aqueous medium comprising the pigment solution (L1) and poor solvent (L2) into an organic solvent medium containing the dispersant.

EP 2 168 674 A1

## Description

BACKGROUND OF THE INVENTION

Field of the Invention

The present invention relates to a method for producing particulates, more particularly to a build-up process for producing organic pigment particulates by mixing a solution containing an organic pigment dissolved in a good solvent with a poor solvent in which solubility to the organic pigment is low.

Description of the Related Art

Pigments are used widely as an optical material, such as a coating material, a printing ink, an electrophotographic toner, an inkjet ink, and a color filter, because of their clear color tones and high coloring powers.

In addition, particles with the size of nanometers are sufficiently small as compared with a visible light, and thus, if they could be solidified (hybridized) with their dispersibility maintained, it would be possible to obtain a material transparent to a visible light. Using this concept, an optical material having excellent properties of nanoparticles may be obtained by dispersing nanoparticles having various optical properties into a resin without aggregation.

For example, in the case of a color filter using pigment particles as an optical material, a high contrast (CR) may be realized by rendering a high selectivity with regard to wave-length, but it is known that, when a dispersion is contaminated with pigment particles with several hundreds of nanometers, the contrast is decreased, thereby impairing its commercial value. To increase CR, particles need to be not only fine, as might be expected, but also be of high monodispersity without containing rough particles.

Meanwhile, production of pigment particulates in nanometers with monodispersity has become possible recently by a so-called build-up method, which is a precipitation-out type method for producing particulates. This is a method in which an organic pigment is dissolved in an appropriate good solvent to a molecular level once, and thereafter a poor solvent is added to induce precipitation by lowering its solubility. For example, a method for producing pigment particulates by using a build-up method is described in Japanese Patent Application Laid-Open No. 2004-43776.

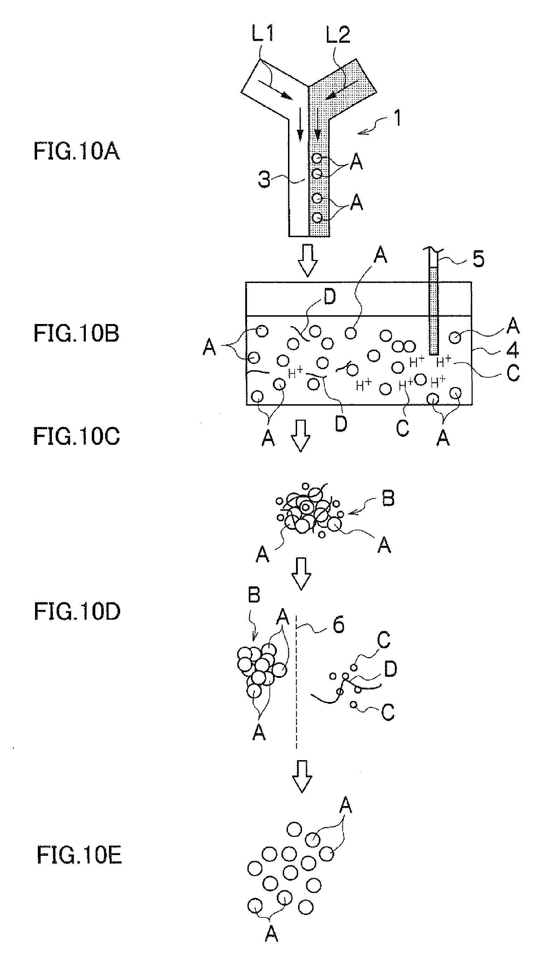

This production method comprises, as shown in Figs. 10A to 10E, a precipitation step (formation of a particle dispersion in an aqueous medium) in which a pigment solution L I containing an organic pigment and a dispersant is contacted with water L2, which is an example of a poor solvent, in a flow channel 3 in a microdevice 1 to precipitate pigment particles A, an aggregation step in which an acid (an aggregation agent) C is added from an adding tube 5 to the particulate dispersion to aggregate the pigment particles A , a separation step in which an aggregate dispersion containing an aggregate B is filtered through a filter 6 to separate the aggregate B from an aqueous medium, and a re-dispersing step (formation of a particle dispersion in an organic solvent medium) in which the separated aggregate B is re-dispersed in an organic solvent. Namely, as can be seen in the method for producing particulates of Japanese Patent Application Laid-Open No. 2004-43776, aggregates of particles dispersed in an aqueous medium are separated once by filtration, and then the separated aggregates are re-dispersed into an organic solvent because a particle dispersion in an organic solvent medium is needed finally.

SUMMARY OF THE INVENTION

However, there are two problems as shown below in the method for producing particulates in Japanese Patent Application Laid-Open No. 2004-43776.

A first problem is that dispersion performance is not fully exerted in proportion to the use amount (content) of a dispersant contained in a pigment solution. As a result, an excessive amount of the dispersant is necessary to fully realize its dispersion performance, thereby leading to an increase in cost of the chemical. Not limiting to the dispersant, there are similar problems in functional chemicals such as a pigment derivative used in production of particulates and a particle-growth controlling agent.

A second problem is that particles with the size of nanometers have a property to aggregate easily because of their large specific surface area, and thus when an attempt is made to re-disperse aggregates of particles, after being separated from an aqueous medium, into an organic solvent medium, re-dispersion of the particles to the same size as before the aggregation is difficult. To solve this problem, the practice is made by a method in which separated aggregates are dried to remove an aqueous medium and thereafter they are re-dispersed into an organic solvent, but in this method aggregates of particles are easily formed by an irreversible structural change of the dispersant during drying. As can be seen in the above, in conventional methods for producing particulates, the actual situation is that pigment particles fully satisfying monodispersity and the size of particulates have not been obtained yet. Further, there is a problem that plural apparatuses are necessary from a precipitation-out step to a re-dispersion step.

The present invention was made in view of the above situation. A first object is to provide a method for producing particulates which can realize reduction of chemical costs by exerting functions with fewer amounts of functional chemicals and reduction of apparatus cost by enabling to function in a single micro-device.

A second object is to provide a method for producing particulates which can realize improvement in monodispersity and in particulate size by producing particulates by directly dispersing particles precipitated in an aqueous medium into an organic solvent medium without steps of aggregation, separation, and drying of the precipitated particles, contrary to conventional methods which have been done with these steps, and reduction of apparatus cost by enabling to function in a single micro-device.

In order to accomplish the objects as mentioned above, a first aspect of the present invention provides a method for producing particulates including: introducing, via respective separate inlet flow channels, a material solution in which a particulate-forming material is dissolved in a solvent, a poor solvent which decreases solubility of the particulate-forming material in the material solution to precipitate particles of the particulate-forming material, a functional solution containing a functional chemical which exerts a function at a surface of the precipitated particles, and a buffer solution which acts as a good solvent to the particulate-forming material and is nearly or more compatible with the poor solvent; merging the material solution, the poor solvent, the functional solution and the buffer solution in one merging region in a manner that a phase of the buffer solution is formed between a phase formed of the material solution and the poor solvent, and a phase of the functional solution; and causing the material solution, the poor solvent, the functional solution and the buffer solution after the merging to flow out from the merging region through one mixing flow channel.

In the first aspect of the present invention, the functional chemical is preferably at least one selected from a dispersant, a pigment derivative, and a particle-growth controlling agent. Here, "nearly or more compatible" is meant by compatibility of 50% or more by mass, more preferably 80% or more by mass, and further more preferably 95% or more by mass.

A dispersant, which is one functional chemical used to produce particulates, is an important chemical for production of particulates having good monodispersity, and exerts its functions by electric repulsion or steric repulsion in a main chain or side chain having a degree of freedom. Accordingly, the dispersant cannot exert its functions unless its functional moiety exerting its dispersing functions is exposed on a surface of particles.

The inventors thoroughly investigated the problems in the past that a dispersant did not exhibit a dispersion performance in proportion to its use amount (its content), and have found that, if the dispersant (functional chemical) is contained in a pigment solution (material solution) in advance as in a conventional manner, the dispersant is present from the initial stage of particles formation where particle nuclei are formed by precipitation, and thus a functional moiety of the dispersant used (contained) is incorporated inside the particles in the course of the growth of particle nuclei. The finding that the functional moiety of the dispersant is incorporated inside the particles can be confirmed by the spin diffusion phenomenon as measured by NMR (nuclear magnetic resonance apparatus).

Here, the functional chemicals which cannot exert their functions fully because of being incorporated inside the particles include all chemicals which exert their functions on surface of particles at the time of production of particulates, such as a pigment derivative, a particle-growth controlling agent, and the like.

According to the first aspect of the present invention, a functional chemical (for example, dispersant) which exerts its function on surface of particles to be formed is separately prepared as a functional solution, without the functional chemical being contained in a material solution. Then, the material solution, a poor solvent, and the functional solution are introduced through their respective separate inlet flow channels, and then merged in one merging region, and flowed out from (through) a single mixing flow channel. Further, a buffer solution which acts as a good solvent to the particulate-forming material and is nearly or more compatible with the poor solvent is merged in the merging region from a separate inlet flow channel in a manner that a phase of the buffer solution is formed between a phase for precipitation formed of the material solution and the poor solvent, and a phase of the functional solution containing the functional chemical (for example dispersant) in the merging region. The merged solution of each solution is mixed with each other in a mixing flow channel, and then flowed out.

Thus, because the timing of when the precipitated particles contact with the dispersant can be delayed by the phase of the buffer solution, the contact between the particle nuclei and the dispersant in the initial stage of the particle formation is prohibited, and in the later stage of the particle formation, contact between post-growth particles and the dispersant to adsorb the dispersant on the particle surface can be prevented. As a result, the functional moiety of the dispersant is not incorporated inside the particles, thereby enabling to exert its dispersing function in proportion to the use amount of the dispersant. The degree of the delay in contact time between the particles and the dispersant may be appropriately controlled by changing the thickness of the phase of the buffer solution.

Accordingly, by carrying out the method of the present invention for the production of particulates, the function may be sufficiently exerted with the use of a small amount of functional chemicals, and thus the cost of chemicals may be reduced. In addition, this may be accomplished by the use of a single micro-device. The present invention may be applied for production of various kinds of particulates, but is particularly effective in production of organic pigment particulates.

In the first aspect of the present invention, it is further more preferable to sandwich the material solution by a poor solvent in the merging region. In addition, the equivalent diameter of each of the respective separate flow inlet channels and the mixing flow channel is preferably 0.5 to 6 mm. The volumetric flow ratio of the material solution to the poor solvent is preferably 1:0.5 to 1:

2, the volumetric flow ratio of the material solution to the dispersant solution is preferably 1:1 to 1:100, and the volumetric flow ratio of the material solution to the buffer solution is preferably 1:0.5 to 1:2.

In order to accomplish the object as mentioned above, a second aspect of the present invention provides a method for producing particulates including: introducing, via respective separate inlet flow channels, a material solution in which a particulate-forming material is dissolved in a solvent, a poor solvent which decreases solubility of the particulate-forming material in the material solution to precipitate particles of the particulate-forming material, and a dispersant solution containing a dispersant in an organic solvent which acts as a good solvent to the particulate-forming material; merging the material solution, the poor solvent and the dispersant solution in one merging region; causing the material solution, the poor solvent and the dispersant solution after the merging to flow out from the one merging region through one mixing flow channel; and producing particulates by directly dispersing particles precipitated in an aqueous medium formed of the material solution and the poor solvent into an organic solvent medium containing the dispersant. Accordingly, particulates can be produced by directly dispersing particles precipitated in an aqueous medium formed of the material solution and the poor solvent, into the organic solvent medium containing the dispersant.

According to the second aspect of the present invention, the material solution, poor solvent and the dispersant contained in the organic solvent which acts as the good solvent to the particulate-forming material are merged in the merging region and flowed in a mixing flow channel. Therefore, the phase of the aqueous medium as the precipitation field where the material solution and the poor solvent are mixed with each other to precipitate the particulates, and the phase of the organic solvent medium as the dispersion field where the precipitated particulates are dispersed into the organic solvent in the dispersant solution, are formed in the mixing flow channel. Accordingly, the particles precipitated in the precipitation field of the phase of the aqueous medium may be dispersed by the dispersant by migrating them into the dispersant solution in the dispersion field of the phase of the organic solvent medium.

Accordingly, because particulates may be produced by directly dispersing the particles precipitated in the aqueous medium into the organic solvent medium without performing steps of aggregation, separation, and drying of the precipitated particles, contrary to conventional methods which have been done with these steps, the monodispersity and the size of particulates may be improved. In addition, the cost associated with the apparatus may be reduced because the effects may be realized by a single micro-device.

Incidentally, by connecting two micro-devices (apparatuses) having Y-shape flow channels in a series, it may also be possible to perform a first-stage mixing of the material solution with poor solvent to form a particle dispersion in an aqueous medium in a first micro-device, and a second-stage mixing of the particle dispersion in an aqueous medium formed in the first stage with the dispersant solution in an organic solvent as the medium in a second micro-device to obtain a particle dispersion in an organic solvent medium. However, it is difficult to precisely control a pressure loss and a residence time between the micro-devices, namely the residence time from the precipitation-out to the dispersion.

On the contrary, the problems associated with the pressure loss and the residence time period may be easily solved by forming, like the aspect of the present invention, the precipitation field and the dispersion field in an adjacent manner (being adjacent with each other) in the mixing flow channel in a single micro-device.

For example, the buffer solution which acts as a good solvent to the particulate-forming material is introduced via a separate inlet flow channel and merged into the merging region in a manner that a phase of the buffer solution is formed between a phase of the aqueous medium and a phase of the organic solvent medium, in the merging region. Accordingly, the timing of when the particles precipitated in the phase of the aqueous medium meet with the dispersant contained in the phase of the organic solvent medium may be controlled, thus the residence time (residence duration) from the precipitation till the dispersion may be easily controlled without the problem of pressure loss. The amount of time (duration) may be controlled by changing a thickness of phase of the buffer solution. Accordingly, because the residence time from the precipitation till the dispersion may be controlled, the growing time of the nuclei of then precipitated particles may be controlled arbitrarily.

In the aspect of the present invention, it is furthermore preferable to sandwich the material solution between two phases of a poor solvent, including water, in the merging region. The equivalent diameter of each of the separate inlet flow channels and the mixing flow channel is preferably 0.5 to 6 mm.

Further, in the present invention, the volumetric flow ratio of the material solution to poor solvent is preferably 1:0.5 to 1:10, and the volumetric flow ratio of the material solution to the dispersant solution is preferably 1:1 to 0.5:10. When the buffer solution is used, the volumetric flow ratio of the material solution to the buffer solution is preferably 1:0.5 to 1:10.

According to the present invention, the cost of chemicals may be reduced because the functions are sufficiently exerted with the use of small amount of functional chemicals, and the cost associated with the apparatus may be reduced because the functional effects may be realized by a single micro-device.

In addition, according to the present invention, because particulates may be produced by directly dispersing the particles precipitated in the aqueous medium into the organic solvent medium without performing steps of aggregation, separation, and drying of the precipitated particles, contrary to conventional methods which have been done with these steps, the monodispersity and the size of particulates may be improved. In addition, the cost associated with the apparatus may be greatly reduced because the effects may be realized by a single micro-device.

BRIEF DESCRIPTION OF THE DRAWINGS

Fig. 1 is a plan view showing one example of a main body of the micro-device to carry out the method for producing particulates in a first embodiment of the present invention;
Fig. 2 is a cross section view of the micro-device along the line 2-2 in Fig. 1;
Figs. 3A and 3B are enlarged diagrams schematically showing the actions of the production method of the present invention;
Figs. 4A and 4B are diagrams showing the relationship between a particle and dispersants in a conventional method and the present invention;
Fig. 5 is a plan view showing one example of a main body of the micro-device to carry out a method for producing particulates in a second embodiment of the present invention;
Fig. 6 is a cross section view of the micro-device along the line 6-6 in Fig. 5;
Figs. 7A and 7B are enlarged diagrams schematically showing the actions of the method for producing particulates used in the second embodiment of the present invention;
Fig. 8 is a plan view showing one example of a main body of the micro-device to carry out a modified example of the second embodiment of the present invention;
Figs. 9A and 9B are enlarged diagrams schematically showing actions of the modified example of the second embodiment of the present invention; and
Figs. 10A, 10B, 10C, 10D and 10E are explanatory diagrams showing steps in a conventional method for producing particulates.

DETAILED DESCRIPTION OF THE PREFERRED EMBODIMENTS

In the following, preferred embodiments of the method for producing particulates relating to the present invention will be explained with reference to the attached drawings.

[A First Embodiment of the Present Invention]

In a first embodiment of the present invention as shown below, the explanation will be made by the example to produce organic pigment particulates using an organic pigment as the particulate-forming material and a dispersant as the functional chemical.

(Micro-device)

First, a preferred aspect of a micro-device with which the method for producing particulates of the first embodiment of the present invention is carried out will be explained.

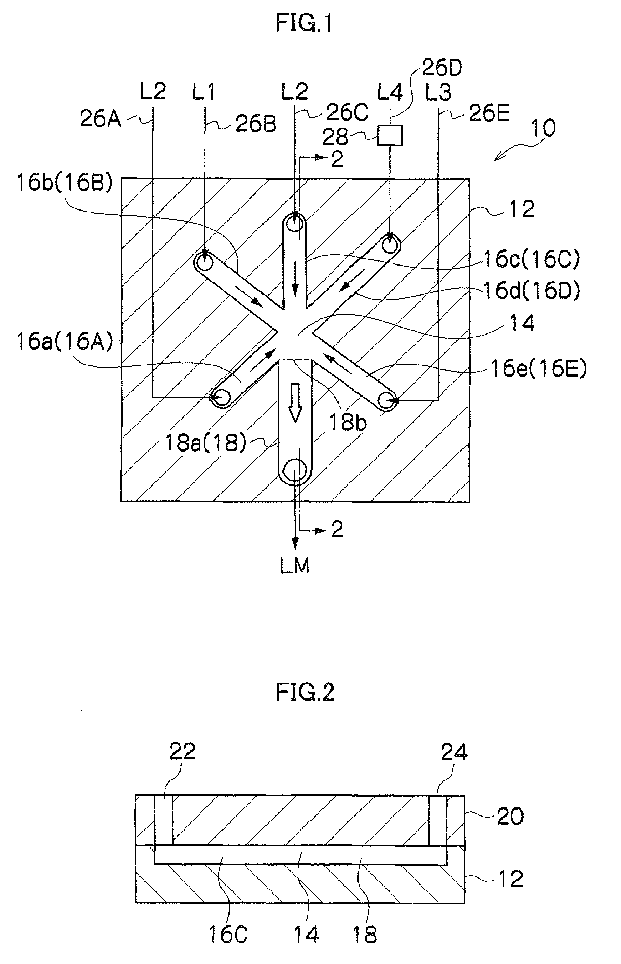

Fig. 1 is a horizontal cross section view of a main body 10 of the micro-device, and Fig. 2 is a vertical cross section view along the line 2-2 in Fig. 1.

As shown in these figures, in a main body 10 of the micro-device, a merging region 14 is formed at almost a center of a base board 12 surface, and five inlet flow channels (gutters) 16a, 16b, 16c, 16d, and 16e, and one mixing flow channel 18a are formed like spokes of a wheel from the merging region 14 as a center. Then, as shown in Fig. 2, a cover plate 20 is put on the base board 12 for integration, forming five inlet flow channels 16A, 16B, 16C, 16D, and 16E, and one mixing flow channel 18.

In the cover plate 20, through holes running toward the thickness direction of the micro-device are formed in the respective positions corresponding to each of the edge of the inlet side of the inlet flow channels 16a to 16e and the edge of the exit side of the mixing flow channel 18a. In Fig. 2, among those through holes, the through holes 22 and 24 of the inlet flow channel 16C and the mixing flow channel 18 are shown.

Then, the feeding lines 26A, 26B, 26C, 26D, and 26E to feed each solution L1 to L4 are connected to the respective through holes so that four liquids L1 to L4 introduced from the five inlet flow channels 16A to 16E are in the order of (from the left to the right in Fig. 1) a poor solvent to an organic pigment L2, a pigment solution (material solution) L1, the poor solvent L2, a buffer solution L4, and a dispersant solution (functional solution) L3. The feeding of each solution L1 to L4 to the inlet flow channels 16A to 16E is made by a feeding device not shown in the figure (for example, a micro-syringe pump and the like). Among the feeding lines 26A to 26E of each solution L1 to L4, at least in the feeding line 26D for the buffer solution L4, a feeding amount control device 28 which controls the feeding amount of the buffer solution L4 is preferably installed. In Fig. 1, a feeding amount control device 28 is installed only in the feeding line 26D for the buffer solution L4, it may also be installed in other feeding lines as well.

Channel widths of the inlet flow channels 16A to 16E are, though not particularly limited, preferably, for example, about 1 mm or less as the equivalent diameter. It is necessary to flow the pigment solution in the state of slurry containing an organic pigment dissolved in a good solvent in such a way as not to clog the flow channel. For example, viscosity of the pigment solution is preferably 20 cP or less, and more preferably 5 cP or less. When the viscosity is 20 cP or less, the channel widths of the inlet flow channels 16A to 16E are preferably 0.5 to 6 mm, and more preferably 0.5 to 2 mm.

Channel width of the mixing flow channel 18 is, as the equivalent diameter, preferably 0.5 mm or more and 6 mm or less, more preferably 1 mm or more and 6 mm or less, and particularly preferably 2 mm or more and 6 mm or less.

The equivalent diameter is also referred to as the corresponding diameter, the term used in mechanical engineering. When a circular pipe equivalent to a pipe (a flow channel in this invention) having an arbitrary cross section shape is assumed, a diameter of its equivalent circular pipe is referred to as the equivalent diameter. The equivalent diameter (deq) is defined as deq = 4A/p, where A is a pipe cross section area, and p is a pipe wet perimeter (perimeter). When applied to a circular pipe, its equivalent diameter is the same as the circular pipe diameter. The equivalent diameter is used to estimate flow or heat transfer properties of the pipe based on the data of its equivalent circular pipe, and shows a spatial scale (representative length) of a phenomenon. The equivalent diameter is shown by deq = $4a^2/4a$ = a if the pipe is a regular tetragon with the side length of a, and deq = $a/\sqrt{3}$ if the pipe is an equilateral triangle with the side length of a, and deq = 2h if the flow is through between flat parallel plates having a channel height of h (see, for example, Mechanical Engineering Dictionary, edited by the Japan Society of Mechanical Engineers, 1997, Maruzen Co., Ltd.).

The length L of the mixing flow channel 18 (the length from the inlet 18b to the through hole 24 of the mixing flow channel 18) is preferably long enough to completely finish the reaction from precipitation-out to dispersion of particles. A maximum width of the merging region 14 is preferably not more than 30 mm.

Shape of the cross section of the inlet flow channels 16A to 16E and of the mixing flow channel 18 may be not only rectangular, but also semicircular, circular, V-shape, elliptical, trapezoidal, and the like.

The main body 10 of the micro-device may be fabricated by using high-precision processing technologies, such as micro-drilling, micro-discharging, molding by electroplating, injection molding, dry etching, wet etching, and hot-emboss processing.

Material of the main body 10 is not particularly restricted and may be any as far as it is corrosive-resistant to various fluids used and applicable to the above-mentioned processing technologies. Specifically, metal materials (iron, aluminum, stainless steel, titanium, various kinds of metals, and so on), resin materials (acrylic resin, PDMS, and the like), glasses (silicon, pyrex, quartz glass, and the like), parylene-treated (vapor-deposited by para-xylene) quartz glass and pyrex glass, or materials treated by a fluorine or hydrocarbon type silane-coupling agent may be preferably used.

In addition, a heating device which heats the main body 10 may be installed (not shown in the figures) as needed. Such heating devices include a method having a heating structure using a metal resistor wire, polysilicon, or the like incorporated into the main body. When the heating structure using a metal resistor wire, polysilicon, or the like is used, the temperature is controlled by this device for heating and a thermal cycle with natural cooling for cooling. Temperature sensing for this case is generally made by using another same resistor wire incorporated so that the temperature is sensed by change in a resistance value in the case of a metal resistor wire, and by a thermoelectric couple in the case of polysilicon. It may also be allowed to incorporate a temperature controlling function using a Peltier device into the main body.

Now, the method for producing particulates according to the first embodiment of the present invention using the micro-device composed as mentioned above will be explained.

First, each solution L1 to L4 used in the present embodiment is prepared.

The pigment solution L1 is prepared as a slurry solution in which a solid organic pigment is wetted by a good solvent. In the build-up process to precipitate and form particulates, the organic pigment needs to be completely dissolved to the molecular level. For this, it is preferable to prepare the pigment solution L1 containing the completely dissolved organic pigment in a good solvent by adding an acid or a basic agent into the slurry solution as mentioned above.

In addition, the poor solvent L2 which is compatible with the good solvent used in the pigment solution L1 but does not dissolve the organic pigment, the dispersant solution L3 which contains a dispersant in a solvent, and the buffer solution L4 which acts as a good solvent to the organic pigment and is nearly or more compatible with the poor solvent L2 are prepared. Here, "nearly or more compatible" is meant by compatibility of 50% or more by mass, more preferably 80% or more by mass, and further more preferably 95% or more by mass.

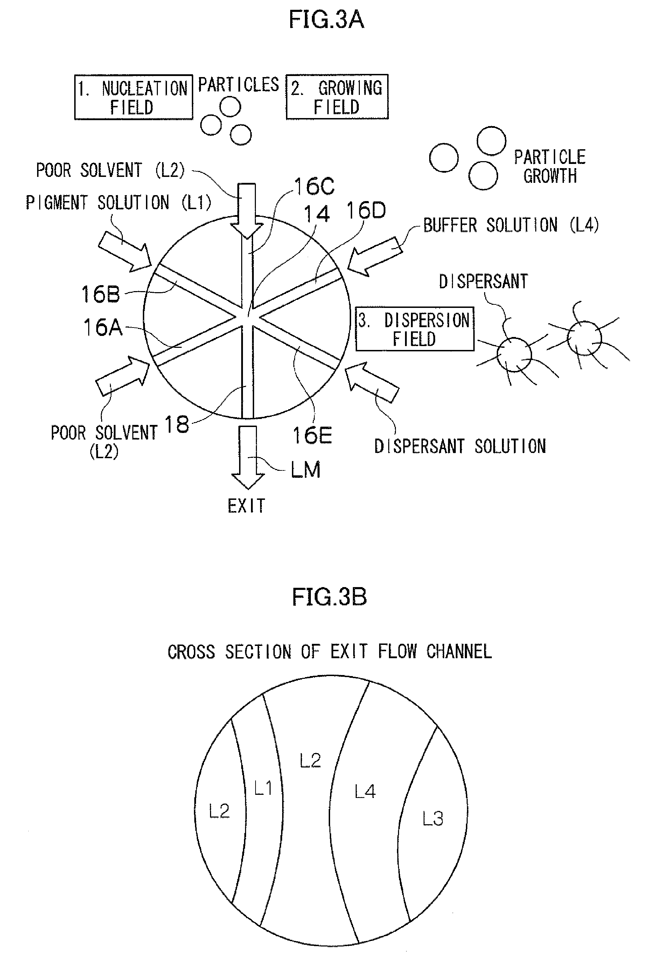

Then, as shown in Fig. 3A, the pigment solution L1, the poor solvent L2, the dispersant solution L3, and the buffer solution L4 are merged through the respective inlet flow channels 16A to 16E by introducing them in a manner that, in the merging region 14, the phase of the buffer solution L4 is formed between the phase formed of the pigment solution L1 and the poor solvent L2 to precipitate particle nuclei, and the phase of the dispersant solution L3 which contains the dispersant.

Fig. 3B is a diagram schematically showing the phases formed by each solution between the merging region 14 and the inlet position 18b of the mixing flow channel 18. According to the embodiment, by using five inlet flow channels 16A to 16E, the phase of the pigment solution L1 is sandwiched on the both sides by a pair of the phases of the poor solvent L2, and the phase of the buffer solution L4 is formed between one of the phases of the poor solvent L2 and the phase of the dispersant solution L3.

Thereafter, the merged solutions of L1 to L4 are mixed with each other with flowing in the mixing flow channel 18 to form the particulate dispersion LM, which then flows out from the main body 10. Namely, the phase of the pigment solution L1 and the phase of the poor solvent L2 are mixed in the mixing flow channel 18 so that the solubility of the organic pigment in the pigment solution L1 is decreased, and thus the nuclei of the precipitated pigment particles (nucleation filed). Also, the particle nuclei precipitated by mixing the phase of the pigment solution L1 and the poor solvent L2 with the phase of the buffer solution L4 are incorporated with growing into the buffer solution L4 which acts as the good solvent to the organic pigment (growing field). In addition, by mixing the phase of the buffer solution L4 with the phase of the dispersant solution L3, particles formed by contacting the grown particles with the dispersant are dispersed in order to avoid the aggregation of the formed particles and the grown particles (dispersion field).

Mixing of the phases in the mixing flow channel 18 takes place simultaneously, and by making the merger occur in the merging region 14 in such a manner as to form the phase of the buffer solution L4 between the phase containing the pigment solution L1 and the poor solvent L2 and the phase of the dispersant solution L3, the timing of when the particle nuclei precipitated in the early stage of the particle formation contact with the dispersant may be delayed by the phase of the buffer solution L4. In this case, the degree of the delay in timing is controlled by the thickness of the phase (phase thickness) of the buffer solution L4. Rough indication of the control in the timing from the particle nuclei formed in the nucleation field grow in the growing field till they are dispersed in the dispersion field by the dispersant is preferably 0.1 to 10 milliseconds. When the timing is shorter than 0.1 millisecond, the dispersant is prone to contact with the particle nuclei in the early stage of the particle formation, and thus prone to be incorporated inside the grown particles. When the timing is longer than 10 milliseconds, aggregation of the grown particles is facilitated, thereby making acquisition of particulates with monodispersity difficult.

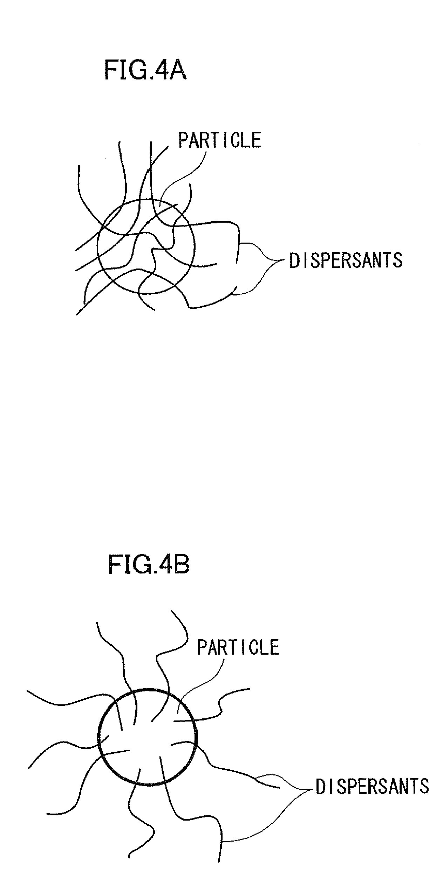

With this, contrary to conventional methods in which the dispersant is contained in the pigment solution L1 in advance, the functional moiety of the dispersant may be exposed outside the particle surface as shown in Fig. 4B without incorporating the functional moiety of the dispersant inside the particles as shown in Fig. 4A. Therefore, according to the method for producing particulates according to the present invention, the dispersion function may be exerted in proportion to the used amount of the dispersant.

In addition, in the present invention, by using the buffer solution L4, the respective solutions L1 to L4 may be merged in a single merging region 14 through respective inlet flow channels 16A to 16E and flowed out from (through) one mixing flow channel from the merging region 14, thereby accomplishing the method for producing particulates of the present invention in a single micro-device.

Here, in the main body 10 in Fig. 1, the embodiment is shown for the case in which five inlet flow channels and one mixing flow channel are extended like spokes of a wheel from the merging region as a center, though not limited to this. The requirement is to have at least four inlet flow channels for the respective solutions L1 to L4, a merging region, and one mixing flow channel, but the relationship among each flow channel may not be necessarily in the form of spokes of a wheel.

(Volumetric Flow Ratio of Each Solution in the First Embodiment)

The volumetric flow ratios of the pigment solution L1, water (poor solvent) L2, the dispersant solution L3, and the buffer solution L4 are preferably in the following relationship based on the flow amount of the pigment solution L1 being 1. The volumetric flow ratio of the pigment solution L1 to water (poor solvent) L2 is preferably 1:0.5 to 1:2. The volumetric flow ratio of the pigment solution L1 to the dispersant solution L3 is preferably 1:1 to 1:100. Further, the volumetric flow ratio of the pigment solution L1 to the buffer solution L4 is preferably 1:0.5 to 1:2. Here, the flow amount necessary for mixing (total of L1 to L3 or L1 to L4) is determined preferably by the Reynolds number at the time of merging of each solution, in other word, by the Reynolds number at the exit of the mixing flow channel, and the volumetric flow ratios may be changed if the Reynolds number at the exit is not changed. Here, the Reynolds number at the exit is preferably 2,000 or more, and more preferably 10,000 or more.

The micro-device 10 is not particularly limited, but requires a structure having plural flow channels, like the micro-device having four flow channels (Fig. 1) or the micro-device having six flow channels (Figs. 4A and 4B).

[A Second Embodiment of the Present Invention]

A second embodiment of the present invention uses three solutions, namely the pigment solution L1 (material solution), water L2 (poor solvent), and the dispersant solution L3.

(Micro-device)

First, a preferred aspect of the micro-device with which the method for producing particulates of the second embodiment of the present invention is carried out will be explained.

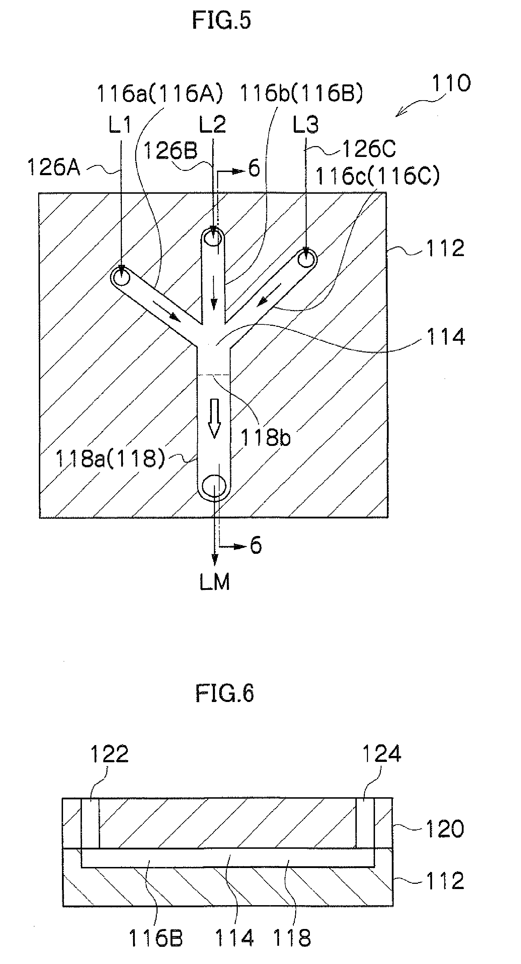

Fig. 5 is a horizontal cross section view of a main body 110 of the micro-device, and Fig. 6 is a vertical cross section view along the line 6-6 in Fig. 5.

As shown in these figures, in the main body 110 of the micro-device, a merging region 114 is formed at almost a center of a base board 112 surface, and three inlet flow channels 116a, 116b, and 116c are formed in the form of the three streets junction from the merging region 114, as well as one mixing flow channel 118a is formed from the merging region 114 in the opposite side of the three inlet flow channels 116a to 116c (bottom side of Fig. 5). Then, as shown in Fig. 6, a cover plate 120 is put on the base board 112 for integration, forming three inlet flow channels 116A, 116B, and 116CE, and one mixing flow channel 118.

In the cover plate 120, through holes running toward the thickness direction are formed in the positions corresponding to the edge of the inlet side of the inlet flow channels 116a to 116c and the edge of the exit side of the mixing flow channel 118a. In Fig. 6, among those through holes, the through holes 122 and 124 of the inlet flow channel 116B and of the mixing flow channel 118 are shown.

The feeding lines 126A, 126B, and 126C for each solution L1 to L3 are connected to respective through holes in a manner that three liquids L1 to L3 introduced from three inlet flow channels 116A to 116C are in the order of (from the left to the right in Fig. 5) the pigment solution L1 (material solution), water L2 which acts as a poor solvent to the organic pigment, and the dispersant solution L3 which contains the dispersant in an organic solvent. The feeding of each solution L1 to L3 to the inlet flow channels 116A to 116C is made by a feeding device not shown in the figure (for example, a micro-syringe pump, and the like). Though not shown in the figure, it is preferable to install a feeding amount control device which controls the feeding amounts in feeding lines 126A to 126C for respective solutions L1 to L3.

Channel widths of the inlet flow channels 116A to 116C are not particularly limited, and preferably, for example, about 1 mm or less as the equivalent diameter, and it is necessary to flow the pigment solution in the state of slurry containing an organic pigment in a good solvent in so as not to clog the flow channel. For example, viscosity of the pigment solution is preferably 20 cP or less, and more preferably 5 cP or less. When the viscosity is 20 cP or less, the channel widths of the inlet flow channels 116A to 116C are preferably 0.5 to 6 mm, more preferably 0.5 to 2 mm, and especially preferably 1 to 2 mm.

The channel width of the mixing flow channel 118 is preferably 0.5 mm or more and 6 mm or less as the equivalent diameter, more preferably 1 mm or more and 6 mm or less, and especially preferably 2 mm or more and 6 mm or less. Here, the equivalent diameter is the same meaning as explained in the first embodiment.

The length L of the mixing flow channel 118 is preferably long enough for the particle nuclei of the particles precipitated in the merging region 114 to grow and complete the dispersion reaction with the dispersant for dispersion. A maximum width of the merging region 114 is preferably not more than 30 mm.

Shape of the cross section of the inlet flow channels 116A to 116E and of the mixing flow channel 118 may be not only rectangular, but also semicircular, circular, V-shape, elliptical, trapezoidal, and so on.

Fabrication, material, and a heating device of the main body 110 of the micro-device are the same as those in the first embodiment.

Then, the method for producing particulates according to the second embodiment of the present invention using the micro-device composed as mentioned above will be explained.

First, each of the solution L1 to L3 used in the present invention is prepared.

The pigment solution L1 is prepared as a slurry solution in which a solid organic pigment is wetted by a good solvent. In the build-up process to precipitate and form particulates, the organic pigment needs to be completely dissolved to the molecular level. For this, it is preferable to prepare the pigment solution L1 containing completely dissolved organic pigment in a good solvent in the molecular level by adding an acid or a basic agent into the slurry solution as mentioned above.

In addition, the pigment solution L1 in which the organic pigment is dissolved in a solvent, water L2 which decreases solubility of the organic pigment in the pigment solution to precipitate organic pigment particles, the dispersant solution L3 which contains the dispersant in an organic solvent which acts as a good solvent to the organic pigment are prepared.

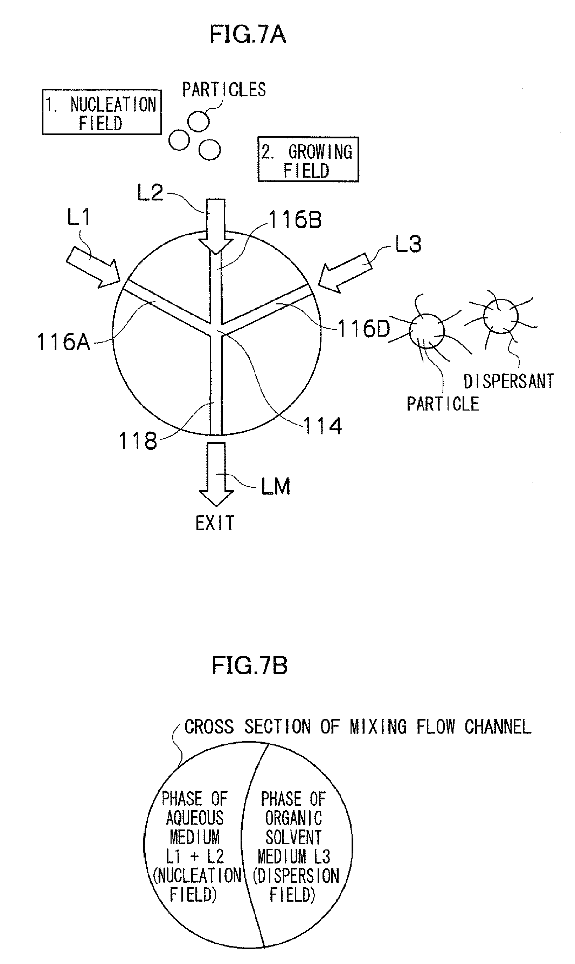

Then, as shown in Fig. 7A, the pigment solution L1, water L2, and the dispersant solution L3 which contains a dispersant in an organic solvent which acts as a good solvent to the organic pigment are merged in the merging region 114 and then flowed out from (via) the mixing flow channel 118. With this, as shown in Fig. 7B, the phase of the aqueous medium as the precipitation field where the particulates are precipitated by mixing the pigment solution L1 with water L2 and the phase of the organic solvent medium as the dispersion field where the precipitated particulates are dispersed into the organic solvent in the dispersant solution L3 are formed in the mixing flow channel 118. Accordingly, the precipitation field and the dispersion field form two neighbor phases in the mixing flow channel 118, and thus a two-stages mixing with a marginal time difference may be possible which performs the first-stage mixing to form the particle dispersion in the aqueous medium by mixing the pigment solution L1 with water L2 in the precipitation field and the second-stage mixing in the dispersion field to form the particle dispersion LM in the organic solvent medium by mixing the particle dispersion in the aqueous medium formed in the precipitation field with the dispersant solution L3 in the organic solvent as a medium.

Accordingly, because particulates may be produced by directly dispersing the particles precipitated in the aqueous medium into the organic solvent medium without performing steps of aggregation, separation, and drying of the precipitated particles, contrary to conventional methods which have been done with these steps, the monodispersity and the size of particulates may be improved. In addition, the cost associated with the apparatus may be reduced because the production may be performed by a single micro-device.

[A Modified Example of the Second Embodiment of the Present Invention]

In a modified example of the second embodiment of the present invention, the pigment solution L1 (material solution), water L2 (poor solvent), the dispersant solution L3, and the buffer solution L4 are used. Here, those which are the same as the second embodiment will not be explained but only tagged with the same reference numerals. (Micro-device)

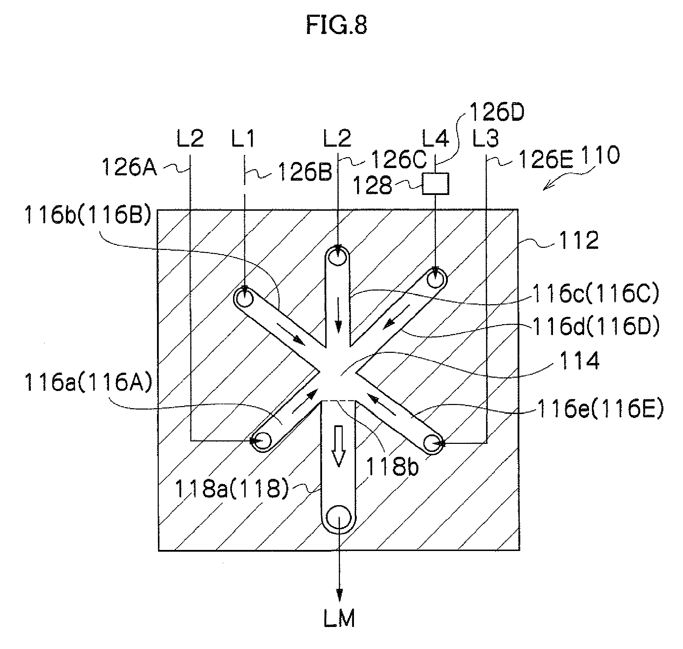

As shown in Fig. 8, in a main body 110 of the micro-device, a merging region 114 is formed at almost a center of a base board 112 surface, and five inlet flow channels 116a, 116b, 116c, 116d, and 116e, and one mixing flow channel 118a are formed like spokes of a wheel from the merging region 114 as a center. Then, a cover plate (not shown in the figure) is put on the base board 112 for integration, forming five inlet flow channels 116A, 116B, 116C, 116D, and 116E, and one mixing flow channel 118, branched like spokes of a wheel.

Then, the feeding lines 126A, 126B, 126C, 126D, and 126E for each solution L1 to L4 are formed in a manner that four liquids L1 to L4 introduced from five inlet flow channels 116A to 116E are in the order of (from the left to the right in Fig. 8) the poor solvent L2 to an organic pigment, the pigment solution (material solution) L1, the poor solvent L2, the buffer solution L4, and the dispersant solution (functional solution) L3. Among the feeding lines 126A to 126E of the respective solutions L1 to L4, at least in the feeding line 126D for the buffer solution L4, a feeding amount control device 128 which controls the feeding amount of the buffer solution L4 is preferably installed. In Fig. 8, a feeding amount control device 128 is installed only in the feeding line 126D for the buffer solution L4, but it may also be installed in other feeding lines as well.

The channel widths of the inlet flow channels 116A to 116E, the channel width of the mixing flow channel, the width of the merging region 114, the cross-section shape of the nuclear flow channel, fabrication of the main body, the heating device of the main body are the same as those of the second embodiment.

Then, the method for producing particulates according to the modified example of the second embodiment of the present invention using the micro-device composed as mentioned above will be explained.

In similar to those in the second embodiment, the pigment solution L1 in which an organic pigment is dissolved in a solvent, water L2 which decreases the solubility of the organic pigment in the pigment solution to precipitate organic pigment particles, the dispersant solution L3 which contains a dispersant in an organic solvent which acts as a good solvent to the organic pigment are prepared. In addition to these solutions L1 to L3, the buffer solution L4 which acts as a good solvent to the organic pigment is prepared.

The buffer solution L4 has preferably 50% or more by mass of the compatibility with water in arbitrary ratio, like dimethyl sulfoxide, N-methylpyrrolidone, and the like. The compatibility of the buffer solution L4 with the dispersant solution L3 is at least 50% or more by mass, preferably 70% or more by mass, and more preferably completely mixing in arbitrary ratio. Further, the viscosities of the buffer solution L4 and the dispersant solution L3 are preferably 100 cP or less, more preferably 10 cP or less, and further more preferably 5 cP or less.

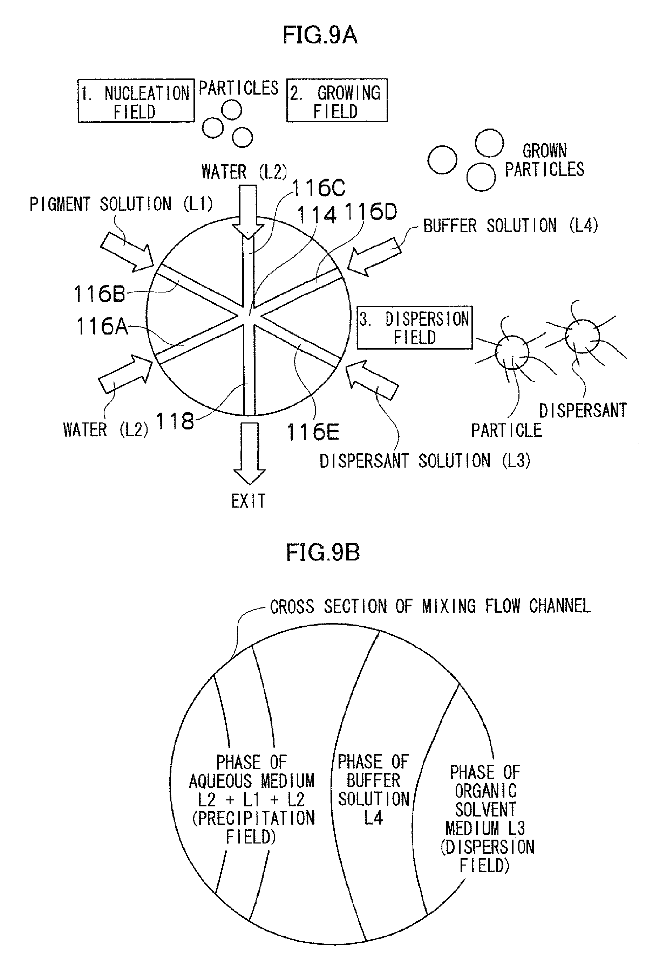

Then, as shown in Fig. 9A, the pigment solution L1, the poor solvent L2, the dispersant solution L3, and the buffer solution L4 are introduced through respective inlet flow channels 116A to 116E and merged in the merging region 114 in such a way as to form the phase of the buffer solution L4 between the phase of the aqueous medium as the precipitation field to precipitate the particles and the phase of the organic solvent medium as the dispersion field to disperse the particles.

Fig. 9B is a diagram schematically showing the phases formed by each solution at the inlet position 118b of the mixing flow channel 118. According to the embodiment, by using five inlet flow channels 116A to 116E, the pigment solution L1 is sandwiched on the both sides by a pair of the phases of the poor solvent L2, and the phase of the buffer solution L4 is formed between one of the phases of the poor solvent L2 and the phase of the dispersant solution L3.

By forming the phase of the buffer solution L4 between the phase of the aqueous medium and the phase of the organic solvent medium as mentioned above, the time from the first-stage mixing in the precipitation field where the particle dispersion in the aqueous medium is formed by mixing the pigment solution L1 with water L2 till the second-stage mixing in the dispersion field where the particle dispersion in the organic solvent medium is formed by mixing the particle dispersion in the aqueous medium formed in the precipitation field with the dispersant solution L3 in the organic solvent as the medium may be controlled arbitrarily. Namely, the amount of time may be made longer with a larger phase thickness of the buffer solution L4. The amount of time may also be made shorter with a smaller phase thickness of the buffer solution L4. With this, the amount of time for the particles precipitated in the phase of the aqueous medium to meet the dispersant contained in the phase of the organic solvent medium may be controlled, and thus the residence time from the precipitation-out till the dispersion may be easily controlled without problem of the pressure loss.

Further, by controlling the residence time from the precipitation-out to the dispersion, the particle-growing time until when the precipitated particle nuclei is dispersed may also be controlled.

(Volumetric Flow Ratio of Each Solution in the Second Embodiment and in the Modified Example Thereof)

The volumetric flow ratios of the pigment solution L1, water (poor solvent) L2, the dispersant solution L3, and the buffer solution L4 are preferably in the following relationship based on the flow amount of the pigment solution L1 being 1. The volumetric flow ratio of the pigment solution L1 to water (poor solvent) L2 is preferably 1:0.5 to 1:10. The volumetric flow ratio of the pigment solution L1 to the dispersant solution L3 is preferably 1:1 to 0.5:10. Further, the volumetric flow ratio of the pigment solution L1 to the buffer solution L4 is preferably 1:0.5 to 1:10. Here, the flow amount necessary for mixing (total of L1 to L4) is determined preferably by the Reynolds number at the time of merging of each solution, in other word, by the Reynolds number at the exit of the mixing flow channel, and the volumetric flow ratios may be changed if the Reynolds number at the exit is not changed. Here, the Reynolds number at the exit is preferably 2,000 or more, and more preferably 10,000 or more.

The micro-device 10 is not particularly limited, but needs to have a structure having plural flow channels like the micro-device having four flow channels (Fig. 5) or the micro-device having six flow channels (Fig. 8).

Then, the various kinds of materials used in the first and the second (including modified example) embodiments of the present invention will be explained.

(Organic Pigments)

Organic pigments used in the embodiments are not limited in terms of hue, and may be magenta pigments, yellow pigments, or cyan pigments. Specifically, there are mentioned magenta pigments such as a perylene, a perinone, a quinacridone, a quinacridone quinone, an anthraquinone, an anthoanthorone, a benzimidazolone, a disazo condensation, a disazo, an azo, an indanthron, a phthalocyanine, a triaryl carbonium, a dioxazine, an aminoanthraquinone, a diketopyrrolopyrrol, a thioindigo, an isoindoline, an isoindolinone, a pyranthrone or an isoviolanthrone, or mixture thereof; yellow pigments; or cyan pigments. More specifically, there are mentioned, for example, perylene pigments such as C. I. Pigment Red 190 (C. I. No. 71140), C. I. Pigment Red 224 (C. I. No. 71127), C. I. Pigment Violet 29 (C. I. No. 71129); perinone pigments such as C. I. Pigment Orange 43 (C. I. No. 71105) or C. I. Pigment Red 194 (C. I. No. 71100); quinacridone pigments such as C. I. Pigment Violet 19 (C. I. No. 73900), C. I. Pigment Violet 42, C. I. Pigment Red 122 (C. I. No. 73915), C. I. Pigment Red 192, C. I. Pigment Red 202 (C. I. No. 73907), C. I. Pigment Red 207 (C. I. Nos. 73900 and 73906), or C. I. Pigment Red 209 (C. I. No. 73905); quinacridone quinone pigments such as C. I. Pigment Red 206 (C. I. Nos. 73900/73920), C. I. Pigment Orange 48 (C. I. Nos. 73900/73920), or C. I. Pigment Orange 49 (C. I. Nos. 73900/73920); anthraquinone pigments such as C. I. Pigment Yellow 147 (C. I. No. 60645); anthoanthorone pigments such as C. I. Pigment Red 168 (C. I. No. 59300); benzimidazolone pigments such as C. I. Pigment Brown 25 (C. I. No. 12510), C. I. Pigment Violet 32 (C. I. No. 12517), C. I.

Pigment Yellow 180 (C. I. No. 21290), C. I. Pigment Yellow 181 (C. I. No. 11777), C. I. Pigment Orange 62 (C. I. No. 11775), or C. I. Pigment Red 185 (C. I. No. 12516); disazo condensation pigments such as C. I. Pigment Yellow 93 (C. I. No. 20710), C. I. Pigment Yellow 94 (C. I. No. 20038), C. I. Pigment Yellow 95 (C. I. No. 20034), C. I. Pigment Yellow 128 (C. I. No. 20037), C. I. Pigment Yellow 166 (C. I. No. 20035), C. I. Pigment Orange 34 (C. I. No. 21115), C. I. Pigment Orange 13 (C. I. No. 21110), C. I. Pigment Orange 31 (C. I. No. 20050), C. I. Pigment Red 144 (C. I. No. 20735), C. I. Pigment Red 166 (C. I. No. 20730), C. I. Pigment Red 220 (C. I. No. 20055), C. I. Pigment Red 221 (C. I. No. 20065), C. I. Pigment Red 242 (C. I. No. 20067), C. I. Pigment Red 248, C. I. Pigment Red 262, or C. I. Pigment Brown 23 (C. I. No. 20060); disazo pigments such as C. I. Pigment Yellow 13 (C. I. No. 21100), C. I. Pigment Yellow 83 (C. I. No. 21108), or C. I. Pigment Yellow 188 (C. I. No. 21094); azo pigments such as C. I. Pigment Red 187 (C. I. No. 12486), C. I. Pigment Red 170 (C. I. No. 12475), C. I. Pigment Yellow 74 (C. I. No. 11714), C. I. Pigment Red 48 (C. I. No. 15865), C. I. Pigment Red 53 (C. I. No. 15585), C. I. Pigment Orange 64 (C. I. No. 12760), or C. I. Pigment Red 247 (C. I. No. 15915); indanthron pigments such as C. I. Pigment Blue 60 (C. I. No. 69800); phthalocyanine pigments such as C. I. Pigment Green 7 (C. I. No. 74260), C. I. Pigment Green 36 (C. I. No. 74265), C. I. Pigment Green 37 (C. I. No. 74255), C. I. Pigment Blue 16 (C. I. No. 74100), C. I. Pigment Blue 75 (C. I. No. 74160:2), or 15 (C. I. No. 74160); triaryl carbonium pigments such as C. I. Pigment Blue 56 (C. I. No. 42800) or C. I. Pigment Blue 61 (C. I. No. 42765:1); dioxazine pigments such as C. I. Pigment Violet 23 (C. I. No. 51319) or C. I. Pigment Violet 37 (C. I. No. 51345); aminoanthraquinone pigments such as C. I. Pigment Red 177 (C. I. No. 65300); diketopyrrolopyrrol pigments such as C. I. Pigment Red 254 (C. I. No. 56110), C. I. Pigment Red 255 (C. I. No. 561050), C. I. Pigment Red 264, C. I. Pigment Red 272 (C. I. No. 561150), C. I. Pigment Orange 71, or C. I. Pigment Orange 73; thioindigo pigments such as C. I. Pigment Red 88 (C. I. No. 73312); isoindoline pigments such as C. I. Pigment Yellow 139 (C. I. No. 56298) or C. I. Pigment Orange 66 (C. I. No. 48210); isoindolinone pigments such as C. I. Pigment Yellow 109 (C. I. No. 56284) or C. I. Pigment Orange 61 (C. I. No. 11295); pyranthrone pigments such as C. I. Pigment Orange 40 (C. I. No. 59700) or C. I. Pigment Red 216 (C. I. No. 59710); or isoviolanthrone pigments such as C. I. Pigment Violet 31 (60010).

Particularly preferable pigments are those belonging to the quinacridone, the diketopyrrolopyrrol, the disazo condensation, the azo, the phthalocyanine, or the dioxazine.

(Dispersants)

Following dispersants may be used in the present embodiments.

There may be mentioned, as anionic dispersants (anionic surfactants), an N-acyl-N-alkyl taurine salt, an aliphatic acid salt, an alkyl sulfate ester salt, an alkyl benzene sulfonic acid salt, an anionic sulfonic acid salt (Aqualon KH-10, commercial name, manufactured by Dai-ichi Kogyo Seiyaku Co., Ltd.), an alkyl naphthalene sulfonic acid salt, a dialkyl sulfosuccinic acid salt, an alkyl phosphate ester salt, a naphthalene sulfonic acid formalin condensate, a polyoxyethylene alkyl sulfate ester salt, and the like. Among them, an N-acyl-N-alkyl taurine salt is preferable. As the N-acyl-N-alkyl taurine salt, the one mentioned in Japanese Patent Application Laid-Open No. H3-273067 is preferable. These anionic dispersants may be used singly or in a combination of two or more kinds. Example of cationic dispersants (cationic surfactants) includes a quaternary ammonium salt, an alkoxylated polyamine, an aliphatic amine polyglycol ether, an aliphatic amine, a diamine and a polyamine derived from an aliphatic amine and an aliphatic alcohol, an imidazoline derived from an aliphatic acid and a salt of a cationic substance derived therefrom. These cationic dispersants may be used singly or in a combination of two or more kinds.

A zwitterionic dispersant is the dispersant having both an anionic moiety which is contained in molecular structure of the anionic dispersants as mentioned above and a cationic moiety which is contained in molecular structure of the cationic dispersants as mentioned above. Example of nonionic dispersants (nonionic surfactants) includes a polyoxyethylene alkyl ether, a polyoxyethylene alkyl aryl ether, a polyoxyethylene aliphatic acid ester, a sorbitan aliphatic acid ester, a polyoxyethylene sorbitan aliphatic acid ester, a polyoxyethylene alkylamine, and a glycerin aliphatic acid ester. Among them, a polyoxyethylene alkyl aryl ether is preferable. These nonionic dispersants may be used singly or in a combination of two or more kinds.

An organic pigment-type dispersant is defined as the organic pigment-type dispersant which is derived from an organic pigment as its parent and produced by modifying the parent structure chemically. For example, there may be mentioned a sugar-containing organic pigment-type dispersant, a piperidyl-containing organic pigment-type dispersant, a naphthalene- or perylene-derived organic pigment-type dispersant, an organic pigment-type dispersants containing a functional group connected to an organic pigment parent structure via a methylene group, an organic pigment parent structure chemically modified by a polymer, a sulfonic-containing organic pigment-type dispersant, a sulfonamide-containing organic pigment-type dispersant, an ether-containing organic pigment-type dispersant, or an organic pigment-type dispersant containing a carboxylic group, a carboxylate ester group, or a carboxamide group, and the like.

As a polymer dispersant, specific examples include polyvinyl pyrrolidone, polyvinyl alcohol, polyvinyl methyl ether, polyethylene oxide, polyethylene glycol, polypropylene glycol, polyacrylamide, vinyl alcohol-vinyl acetate copolymer, partially formalized polyvinyl alcohol, partially butyralized polyvinyl alcohol, vinyl pyrrolidone-vinyl acetate copolymer, polyethylene oxide/propylene oxide block copolymer, a polyacrylic acid salt, a polyvinyl sulfuric acid salt, a poly(4-vinylpyridin) salt, a polyamide, a polyallylamine salt, a condensed naphthalenesulfonic acid salt, a styrene-acrylic acid salt copolymer, a styrene-methacrylic acid salt copolymer, an acrylate ester-acrylic acid salt copolymer, an acrylate ester-methacrylic acid salt copolymer, a methacrylate ester-acrylic acid salt copolymer, a methacrylate ester-methacrylic acid salt copolymer, a styrene-itaconic acid salt copolymer, an itaconate ester-itaconic acid salt copolymer, a vinylnaphthalene-acrylic acid salt copolymer, a vinylnaphthalene-methacrylic acid salt copolymer, a vinylnaphthalene-itaconic acid salt copolymer, a cellulose derivative, and a starch derivative. In addition, natural polymers including an alginic acid ester, gelatine, albumin, casein, gum arabic, Tongan gum, and a lignin sulfonic acid salt may also be used. Among them, polyvinyl pyrrolidone is particularly preferable. These polymers may be used singly or in a combination of two or more kinds. Also, the aspect in which an anionic dispersant is contained in an aqueous medium and a nonionic dispersant and/or a polymer dispersant is contained in an organic pigment solution may be mentioned.

Amount of the dispersant to be added is preferably 0.1 to 1,000 parts by mass, more preferably 1 to 500 parts by mass, and further more preferably 10 to 250 parts by mass, relative to 100 parts by mass of an organic pigment in order to further improve dispersion homogeneity and storage stability of the organic pigment. When the amount is less than 0.1 part by mass, there may be a case not showing improvement in the dispersion stability of organic pigment particulates.

In the method for producing particulates explained in the above-mentioned embodiments, though explained by the examples of producing organic pigment particulates, the methods and the apparatuses for producing particulates of the present invention may be applied to other various reactions. Examples of other particulate-forming material include titanium dioxide, calcium carbonate, a copper oxide, an aluminum oxide, an iron oxide, a chromium oxide, bismuth vanadate, rutile type mixed-phase pigments, a silver halide, silica, and carbon black, though not limited to them.

Although the organic pigment needs to be dissolved homogenously in a basic or an acidic aqueous medium, whether to dissolve in an acidic or a basic medium is determined by the condition in which the pigment concerned is more easily dissolved homogeneously. Generally, a basic condition is used when the pigment has a base-dissociable group in its molecular structure. Alternatively, an acidic condition is used when the pigment does not have a base-dissociable group but has many proton-attachable nitrogen atoms in its molecular structure. For example, a pigment of a quinacridone, a diketopyrrolopyrrol, or a disazo condensation is dissolved in a basic condition, and a phthalocyanine pigment is dissolved in an acidic condition.

Examples of the base used to dissolve in the basic condition include inorganic bases such as lithium hydroxide, sodium hydroxide, potassium hydroxide, calcium hydroxide, or barium hydroxide; and organic bases such as a trialkyl amine, a diazabicycloundecene (DBU), and a metal alkoxide, though inorganic bases are preferable.

Amount of the base to be used is such that a pigment is dissolvable homogeneously, and in the case of inorganic bases, the amount is preferably 1.0 to 30 equivalents by mol, more preferably 2.0 to 25 equivalents by mol, and further more preferably 3 to 20 equivalents by mol relative to the pigment, though it is not particularly restricted. In the case of organic bases, the amount is preferably 1.0 to 100 equivalents by mol, more preferably 5.0 to 100 equivalents by mol, and further more preferably 20 to 100 equivalents by mol relative to the pigment.

Examples of the acid to dissolve in the acidic condition include inorganic acids such as sulfuric acid, hydrochloric acid, and phosphoric acid, or organic acids such as acetic acid, trifluoroacetic acid, oxalic acid, methane sulfonic acid, and trifluoromethane sulfonic acid, though inorganic acids are preferable, in particular sulfuric acid.

Amount of the acid to be used is such that a pigment is dissolvable homogeneously, and in many cases, more excessive amount of acid is used as compared with the case where the bases are used, though it is not particularly restricted. The amount is, regardless of inorganic or organic acids, preferably 3 to 500 equivalents by mol, more preferably 10 to 500 equivalents by mol, and further more preferably 30 to 200 equivalents by mol relative to the pigment.

In the present embodiment, although explanation was made by referring to the dispersant as the functional chemical, the same is applicable to all chemicals which can exert its functions on a particle surface, including a pigment derivative, a particle-growth controlling agent, and the like.

(Buffer Solution)

The buffer solution is preferably an organic solvent which acts as a good solvent to an organic pigment and is nearly or more compatible with a poor solvent (for example, water), namely, an organic solvent having 50% or more by mass of compatibility is preferable, more preferably 80% or more by mass, and further more preferably 95% or more by mass, in an arbitrary ratio. For example, non-protonic solvents such as N-methyl pyrrolidone (NMP), dimethyl sulfoxide (DMSO), dimethyl formamide (DMF), and acetonitrile are preferable as the buffer solution. Specifically, dimethyl sulfoxide (DMSO) may be preferable as the buffer solution, when water is used as a poor solvent.

Compatibility of the buffer solution L4 with an organic solvent of the dispersant solution L3 is preferably at least 50% by mass, more preferably 70% by mass or more, and further more preferably completely at an arbitrary ratio. For example, PGMEA (propylene glycol monomethyl ether acetate), ethyl lactate, ethyl acetate, MEK (methyl ethyl ketone), and the like are preferable as the organic solvent for the dispersant solution.

[Examples]

[Example A]

Based on Example A as shown in the following, the method for producing particulates of the first embodiment of the present invention will be explained more particularly, but the first embodiment of the present invention is not restricted to these Examples at all.

Examples are for the production of organic pigment particulates by using the micro-device as shown in Fig. 1. Here, a particulates-producing apparatus with the micro-device having a rectangular mixing flow channel with 0.5 mm in both length and width was used. A cover plate made of a transparent resin for the main body was used so that the state of phase formation in the merging region and in the mixing flow channel could be observed by a microscope.

The pigment solution L1, the poor solvent L2, the dispersant solution L3, and the buffer solution L4 were prepared as follows.

(1) Method for preparing the pigment solution L1
Powdered PR122, one kind of magentas, was used as the pigment. The pigment was dissolved into dimethyl sulfoxide (DMSO), a non-protonic good solvent, to form a slurry state with a concentration of 5% by mass. Thereafter, SM28 (a methanol solution of sodium methoxide with a concentration of 28% by mass), one kind of basic substances, was added to completely dissolve the pigment in a molecular level, thereby the pigment solution L1 was obtained.
(2) Distilled water was used as the poor solvent L2.
(3) Preparation of the dispersant solution L3
The dispersants polyvinyl pyrrolidone K25 and Solsperse 24000 (manufactured by Avecia Pigments & Additives) were contained in the organic solvent PGMEA, the dispersing solvent, to obtain the dispersant solution L3 in such a way as to have a total concentration of 5% by mass.
(4) The above-mentioned dimethyl sulfoxide (DMSO) was used as the buffer solution L4.
(5) Reaction conditions

i) Setting flow rates: by using micro-syringe pumps (manufactured by Harvard Apparatus Inc.), the solution L1, the poor solvent L2, the dispersant solution L3, and the buffer solution were feedd at the constant rates of 20 mL/minute, 40 mL/minute, 100 mL/minute, and 10 mL/minute, respectively (L: liter).
ii) Reaction temperature: the test was continued for 20 hours at 18°C without interruption.

As Comparative Example, by using a micro-device having Y-shape flow channels wherein the dispersant was contained in the pigment solution, the dispersant-containing pigment solution and a poor solvent were introduced via two respective channels which constitute the upper two channels in the Y-shape flow channels to merge in the merging region, and flowed out from one flow channel which constitutes the lower one channel in the Y-shape flow channels.

In both Example and Comparative Example, the same amounts of the dispersant were used. Particle diameters and monodispersities (Mv/Mn) of the pigment particulates produced in Example and Comparative Example were measured by using Nanotrac UPA-EX150 (manufactured by Nikkiso Co., Ltd.) to obtain median average diameters and arithmetic standard deviation values. Here, Mv indicates mean volume diameter, and Mn indicates mean number diameter.

As a result, in Example, the organic pigment particulates with 20.6 nm as the particle diameter and 1.33 as the monodispersity (Mv/Mn) were obtained.

In Comparative Example, the organic pigment particulates with 35.5 nm as the particle diameter and 1.70 as monodispersity (Mv/Mn) were obtained.

Measurements of NMR of the pigment particulates of Example and Comparative Example showed that the ratio of the functional moiety of the dispersant incorporated inside the pigment particles was large in the case of Comparative Example.

[Example B]

Based on Example B as shown in the following, the method for producing particulates of the second embodiment of the present invention will be explained more particularly, but the second embodiment of the present invention is not restricted to these Examples at all.

(Preparation of the Pigment Solution L1)

Powdered PR122, one kind of magentas, was used as the pigment. The pigment was dissolved in dimethyl sulfoxide (DMSO) to form a slurry state with a concentration of 5% by mass. Thereafter, SM28 (a methanol solution of sodium methoxide with a concentration of 28% by mass), one kind of basic substances, was added to completely dissolve in a molecular level, thereby the pigment solution L1 was obtained.

(Preparation of the Dispersant Solution L3)

Dispersant polyvinyl pyrrolidone K25 was contained in the organic solvent PGMEA, the dispersing solvent, to obtain the dispersant solution L3 in such a way as to have a concentration of 0.5% by mass.

(Poor Solvent)

Distilled water was used.

By using the micro-device as the four-channels reactor with 1-mm diameter of the channels as shown Fig. 5, the pigment solution L1, water (poor solvent) L2, and the dispersant solution L3 were introduced via respective inlet flow channels 116A, 116B, and 116C to merge in the merging region 114 and flowed out from (through) the mixing flow channel 118.

The volumetric flow rates of the pigment solution L1, water (poor solvent) L2, and the dispersant solution L3 were controlled by setting the flow rates at 100 mL/minute (L1), 100 mL/minute (L2), and 1,000 mL/minute (L3), respectively, by using micro-syringe pumps (manufactured by Harvard Apparatus Inc.). The temperature of the solution to produce particulates by mixing each solution was set at 18°C in this Example, though it is preferably 0°C or above and 60°C or below, and the test was continued for 20 hours without interruption.

Measurement of the pigment particle diameter in the particle dispersion LM in the organic solvent medium flowed out from the mixing flow channel 118 by DLS (dynamic light scattering method) showed that pigment particles in a finely dispersed state (volume-average diameter of 20 nm) were present in the state of dispersion in the particle dispersion LM in the organic solvent medium.

It was found that, from this, the particulates could be produced by directly dispersing the particles precipitated in the aqueous medium into an organic solvent medium without steps of aggregation, separation, and drying of the precipitated particles, contrary to conventional methods which have been done with these steps.

In the present embodiment, the amount of water to be used as the poor solvent (or other kinds of poor solvent) may be as much as it can form particles (precipitation of pigment particle nuclei) in the phase of the aqueous medium. However, if the total flow amount is decreased by decreasing the amount of the poor solvent, a mixing effect of the micro-device is decreased. This occurs by the lack of acceleration of a turbulent flow mixing due to the decrease in the total flow amount, as can be seen in the relationship between the Reynolds Re number and the fluid mixing characteristics. Accordingly, when the amount of the poor solvent is reduced, the mixing effect may be maintained by increasing the organic solvent used in the dispersant solvent by the amount of the decreased poor solvent so that the total flow amount is not changed. For example, in the above Example, it may also be possible to make the volumetric flow rates of the pigment solution L1, water (poor solvent) L2, and the dispersant solution L3 be 100 mL/minute (L1), 50 mL/minute (L2), and 1,050 mL/minute (L3), respectively.

Thus, reduction of the amount of the poor solvent, which is unnecessary after particle formation, at the time of the particle formation is advantageous both in nuclear formation of pigment particles and in dispersion because the amount of the poor solvent necessary for particle formation by supersaturation precipitation may be reduced and the precipitated pigment particles may be easily dispersed into the particle dispersion LM.

**Claims**

1. A method for producing particulates comprising:

   introducing, via respective separate inlet flow channels (16A to 16E), a material solution (L1) in which a particulate-forming material is dissolved in a solvent, a poor solvent (L2) which decreases solubility of the particulate-forming material in the material solution (L1) to precipitate particles of the particulate-forming material, a functional solution containing a functional chemical which exerts a function at a surface of the precipitated particles, and a buffer solution (L4) which acts as a good solvent to the particulate-forming material and is nearly or more compatible with the poor solvent (L2);
   merging the material solution (L1), the poor solvent (L2), the functional solution and the buffer solution (L4) in one merging region (14) in a manner that a phase of the buffer solution (L4) is formed between a phase formed of the material solution (L1) and the poor solvent (L2), and a phase of the functional solution; and
   causing the material solution (L1), the poor solvent (L2), the functional solution and the buffer solution (L4) after the merging to flow out from the merging region (14) through one mixing flow channel (18).

2. The method for producing particulates according to claim 1, wherein the functional chemical is at least one selected from a dispersant, a pigment derivative, and a particle-growth controlling agent.

3. The method for producing particulates according to claim 1 or 2, further comprising
   controlling an amount of time for mixing the phase formed of the material solution (L1) and the poor solvent (L2) with the phase of the functional solution by changing a thickness of the phase of the buffer solution (L4).

4. The method for producing particulates according to any one of claims 1 to 3, wherein the material solution (L1) is sandwiched by the poor solvents (L2) in the one merging region (14).

5. The method for producing particulates according to any one of claims 1 to 4, wherein the equivalent diameter of each of the respective separate inlet flow channels and the mixing flow channel (18) is in a range of 0.5 to 6 mm.

6. The method for producing particulates according to any one of claims 1 to 5, wherein the particulate-forming material is an organic pigment.

7. The method for producing particulates according to any one of claims 1 to 6, wherein a volumetric flow ratio of the material solution (L1) to the poor solvent (L2) is 1:0.5 to 1:2, a volumetric flow ratio of the material solution (L1) to the dispersant solution is 1:1 to 1:100, and a volumetric flow ratio of the material solution (L1) to the buffer solution (L4) is 1:0.5 to 1:2.

8. A method for producing particulates, comprising:

   introducing, via respective separate inlet flow channels (116A to 116E), a material solution (L1) in which a particulate-forming material is dissolved in a solvent, a poor solvent (L2) which decreases solubility of the particulate-forming material in the material solution (L1) to precipitate particles of the particulate-forming material, and a dispersant solution (L3) containing a dispersant in an organic solvent which acts as a good solvent to the particulate-forming material;
   merging the material solution (L1), the poor solvent (L2) and the dispersant solution (L3) in one merging region (114);
   causing the material solution (L1), the poor solvent (L2) and the dispersant solution (L3) after the merging to flow out from the one merging region (114) through one mixing flow channel (118); and
   producing particulates by directly dispersing particles precipitated in an aqueous medium formed of the material solution (L1) and the poor solvent (L2) into an organic solvent medium containing the dispersant.

9. The method for producing particulates according to claim 8, further comprising
   controlling a timing of when the precipitated particles meets with the dispersant by merging a buffer solution (L4) which acts as a good solvent to the particulate-forming material in the one merging region (114) from a different inlet flow channel in a manner that a phase of the buffer solution (L4) is formed between a phase of the aqueous medium and a phase of the organic solvent medium.

10. The method for producing particulates according to claim 9, further comprising
    controlling an amount of time for meeting of the precipitated particles and the buffer solution (L4) by changing a thickness of the phase of the buffer solution (L4).

**11.** The method for producing particulates according to any one of claims 8 to 10, wherein the material solution (L1) is sandwiched by the poor solvent (L2) in the one merging region (114).

**12.** The method for producing particulates according to any one of claims 8 to 11, wherein the equivalent diameter of the respective separate inlet flow channels and the mixing flow channel (118) is in a range of 0.5 to 6 mm.

**13.** The method for producing particulates according to any one of claims 8 to 12, wherein the particulate-forming material is an organic pigment.

**14.** The method for producing particulates according to any one of claims 8 to 13, wherein a volumetric flow ratio of the material solution; (L1) to the poor solvent (L2) is 1:0.5 to 1:10, and a volumetric flow ratio of the material solution (L1) to the dispersant solution (L3) is 1:1 to 0.5:10.

**15.** The method for producing particulates according to any one of claims 9 to 13, wherein a volumetric flow ratio of the material solution (L1) to the buffer solution (L4) is 1:0.5 to 1:10.

## FIG.1

L2  L1  L2  L4  26D
26A  26B  26C  L3  26E
28  2  10
16b(16B)  12
16c(16C)
16d(16D)
14
16a(16A)
16e(16E)
18a(18)  18b
2
LM

## FIG.2

22  24
20
12
16C  14  18

# FIG.3A

1. NUCLEATION FIELD    PARTICLES    2. GROWING FIELD

POOR SOLVENT (L2)

PIGMENT SOLUTION (L1)

16C

14  16D

PARTICLE GROWTH

BUFFER SOLUTION (L4)

16B

16A

DISPERSANT

3. DISPERSION FIELD

POOR SOLVENT (L2)

18

16E

LM

DISPERSANT SOLUTION

EXIT

# FIG.3B

CROSS SECTION OF EXIT FLOW CHANNEL

L2

L2  L1    L4

L3

FIG.4A

FIG.4B

## FIG.5

116a(116A) 116b(116B) 110

L1 L2 L3 126C
126B 116c(116C)
126A 6 112

114

118a(118) 118b

6

LM

## FIG.6

122 124

120

112

116B 114 118

# FIG.7A

1. NUCLEATION FIELD

PARTICLES

2. GROWING FIELD

L2

L1

116B

L3

116A

116D

118

114

LM

EXIT

DISPERSANT

PARTICLE

# FIG.7B

CROSS SECTION OF MIXING FLOW CHANNEL

PHASE OF AQUEOUS MEDIUM L1 + L2 (NUCLEATION FIELD)

PHASE OF ORGANIC SOLVENT MEDIUM L3 (DISPERSION FIELD)

FIG.8

# FIG.9A

| 1. NUCLEATION FIELD | PARTICLES | 2. GROWING FIELD |

GROWN PARTICLES

WATER (L2)

PIGMENT SOLUTION (L1)

116C

114 116D

BUFFER SOLUTION (L4)

116B

116A

| 3. DISPERSION FIELD |

DISPERSANT

WATER (L2) 118

116E

PARTICLE

DISPERSANT SOLUTION (L3)

EXIT

# FIG.9B

CROSS SECTION OF MIXING FLOW CHANNEL

PHASE OF AQUEOUS MEDIUM L2 + L1 + L2 (PRECIPITATION FIELD)

PHASE OF BUFFER SOLUTION L4

PHASE OF ORGANIC SOLVENT MEDIUM L3 (DISPERSION FIELD)

FIG.10A

FIG.10B

FIG.10C

FIG.10D

FIG.10E

Europäisches
Patentamt

European
Patent Office

Office européen
des brevets

# EUROPEAN SEARCH REPORT

Application Number

EP 09 17 1342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/090697 A1 (TESHIMA TAKAYUKI [JP] ET AL) 4 May 2006 (2006-05-04) <br> * abstract * <br> * paragraph [0012] - paragraph [0024] * <br> * paragraph [0045] - paragraph [0050] * <br> * paragraph [0061] - paragraph [0076] * <br> * paragraph [0086] - paragraph [0092] * <br> * paragraph [0102] - paragraph [0118]; claims; figures; examples * <br> ----- | 1-15 | INV.<br>B01J19/00<br>C09B67/00 |
| X | WO 2006/101240 A1 (FUJI PHOTO FILM CO LTD [JP]; UEYAMA TOMOHIDE [JP]; NAGASAWA HIDEHARU []) 28 September 2006 (2006-09-28) <br> * abstract * <br> * page 4, line 10 - page 6, line 23 * <br> * page 10, line 23 - page 13, line 30 * <br> * page 16, line 1 - page 17, line 9; claims; figures; example * <br> ----- | 1-15 | |
| X | WO 2007/150030 A2 (MASSACHUSETTS INST TECHNOLOGY [US]; BRIGHAM & WOMENS HOSPITAL [US]; KA) 27 December 2007 (2007-12-27) <br> * abstract * <br> * paragraph [0007] - paragraph [0008] * <br> * paragraph [0014] * <br> * paragraph [0021] - paragraph [0023] * <br> * paragraph [0028] - paragraph [0029] * <br> * paragraph [0049] - paragraph [0064]; claims; figure 3 * <br> ----- | 1-15 | TECHNICAL FIELDS SEARCHED (IPC)<br><br>B01J<br>C09B |
| A | EP 1 839 733 A2 (FUJIFILM CORP [JP]) 3 October 2007 (2007-10-03) <br> * abstract * <br> * claims; figures * <br> ----- <br> -/-- | 1-15 | |

The present search report has been drawn up for all claims

| Place of search | Date of completion of the search | Examiner |
|---|---|---|
| Munich | 10 February 2010 | Nazario, Luis |

EPO FORM 1503 03.82 (P04C01)

**EUROPEAN SEARCH REPORT**

Europäisches Patentamt
European Patent Office
Office européen des brevets

Application Number

EP 09 17 1342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 103 345 A2 (FUJIFILM CORP [JP]) 23 September 2009 (2009-09-23) * paragraph [0065] - paragraph [0066]; claims; figures * ----- | 8,11-14 | |
| E | EP 2 105 468 A1 (FUJIFILM CORP [JP]) 30 September 2009 (2009-09-30) * abstract * * page 10 * * page 15 * * paragraph [0033] * * paragraph [0059] - paragraph [0072] * * claims; figures; examples * ----- | 8,11-14 | |

TECHNICAL FIELDS SEARCHED (IPC)

The present search report has been drawn up for all claims

| Place of search | Date of completion of the search | Examiner |
|---|---|---|
| Munich | 10 February 2010 | Nazario, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 168 674 A1**

**ANNEX TO THE EUROPEAN SEARCH REPORT
ON EUROPEAN PATENT APPLICATION NO.**

EP 09 17 1342

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2010

| Patent document cited in search report | | Publication date | Patent family member(s) | | Publication date |
|---|---|---|---|---|---|
| US 2006090697 | A1 | 04-05-2006 | JP | 2006124556 A | 18-05-2006 |
| WO 2006101240 | A1 | 28-09-2006 | CN | 101146606 A | 19-03-2008 |
| | | | EP | 1861197 A1 | 05-12-2007 |
| | | | JP | 2006263558 A | 05-10-2006 |
| | | | KR | 20070113241 A | 28-11-2007 |
| | | | US | 2009253841 A1 | 08-10-2009 |
| WO 2007150030 | A2 | 27-12-2007 | US | 2010022680 A1 | 28-01-2010 |
| EP 1839733 | A2 | 03-10-2007 | JP | 2007260569 A | 11-10-2007 |
| | | | US | 2007231226 A1 | 04-10-2007 |
| EP 2103345 | A2 | 23-09-2009 | JP | 2009226261 A | 08-10-2009 |
| | | | US | 2009238736 A1 | 24-09-2009 |
| EP 2105468 | A1 | 30-09-2009 | JP | 2009256652 A | 05-11-2009 |
| | | | US | 2009241800 A1 | 01-10-2009 |

For more details about this annex : see Official Journal of the European Patent Office, No. 12/82

**EP 2 168 674 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004043776 A
- JP H3273067 B

**Non-patent literature cited in the description**

- Mechanical Engineering Dictionary. Maruzen Co., Ltd, 1997